**Europäisches Patentamt**

**European Patent Office**

**Office européen des brevets**

(19)

(11) Veröffentlichungsnummer: **0 048 706**
**B1**

(12) ## EUROPÄISCHE PATENTSCHRIFT

(45) Veröffentlichungstag der Patentschrift:
07.09.83

(21) Anmeldenummer: **81890131.6**

(22) Anmeldetag: **24.07.81**

(51) Int. Cl.³: **F 24 J 3/02**, E 04 D 13/00

(54) **Sonnenkollektor für ein Welldach.**

(30) Priorität: **18.09.80 AT 4665/80**

(43) Veröffentlichungstag der Anmeldung:
**31.03.82 Patentblatt 82/13**

(45) Bekanntmachung des Hinweises auf die Patenterteilung:
**07.09.83 Patentblatt 83/36**

(84) Benannte Vertragsstaaten:
**BE CH DE FR GB IT LI LU NL SE**

(56) Entgegenhaltungen:
**AT-B-348 202**
**DE-A-2 755 139**
**DE-A-2 755 555**
**DE-A-2 809 031**
**FR-A-2 468 079**

(73) Patentinhaber: **Wollersberger, Alois, Stöbichen 6,
A-4783 Wernstein (AT)**

(72) Erfinder: **Wollersberger, Alois, Stöbichen 6,
A-4783 Wernstein (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Sonnenkollektor für ein Welldach

Die Erfindung bezieht sich auf einen Sonnenkollektor für ein Welldach mit einem auf dem Dach vorgesehenen Leitungssystem, das aus parallelen, im Bereich der Wellentäler der Dachhaut verlegten Leitungssträngen für das aufzuheizende Wärmemittel zusammengesetzt ist.

Übliche Sonnenkollektoren sind kastenartig aufgebaut, wobei der Kastenboden durch eine Isolierschicht gebildet wird, auf der das Rohrsystem für das Wärmemittel, im allgemeinen Wasser, verlegt ist. Abgedeckt wird dieses Leitungssystem durch eine transparente Kunststoffplatte, die mit Abstand oberhalb des Leitungssystems liegt. Nachteilig bei diesen bekannten Sonnenkollektoren ist vor allem, daß sie in störender Weise auf dem Dach aufgebaut werden müssen, was eine besondere Tragkonstruktion erfordert. Außerdem ist eine Wartung solcher Sonnenkollektoren erforderlich, weil die Strahlungsdurchlässigkeit der Kunststoffabdeckung den Wirkungsgrad des Kollektors entscheidend mitbestimmt.

Um den Aufwand für die Herstellung von Sonnenkollektoren herabzusetzen, ist es bekannt (AT-B-348 202), die Dachhaut eines Welldaches in die Kollektorkonstruktion einzubeziehen, indem die Dachhaut als tragender Boden des Sonnenkollektors verwendet wird. Auf die gewellte Dachhaut wird dabei eine Isolierschicht aufgebracht, die mit einer Absorberplatte abgedeckt ist, wobei sich zwischen der Absorberplatte und der Isolierschicht im Bereich der Wellentäler der Dachhaut Hohlräume ergeben, durch die mit der Absorberplatte verbundene Rohrstränge geführt sind. Mit Abstand oberhalb der Absorberplatte ist wiederum eine durchsichtige Abdeckung vorgesehen, um die Wärmeeinstrahlung besser ausnützen zu können. Obwohl mit Hilfe dieser bekannten Konstruktion der Aufwand für einen Sonnenkollektor herabgesetzt werden konnte, bleibt er noch erheblich. Vor allem aber vermag auch eine solche Konstruktion den störenden Aufbau auf dem Dach nicht zu vermeiden.

Der Erfindung liegt demnach die Aufgabe zugrunde, diese Mängel zu vermeiden und einen Sonnenkollektor der eingangs geschilderten Art zu schaffen, der einfach aufgebaut ist und keinen kastenartigen Aufbau auf der Dachhaut notwendig macht.

Die Erfindung löst die gestellte Aufgabe dadurch, daß die Leitungsstränge jeweils aus einer im Querschnitt an die Form der Wellentäler der Dachhaut angepaßten, nach oben offenen, doppelwandigen Rinne bestehen, die zwischen den beiden Rinnenwänden einen geschlossenen Strömungskanal für das Wärmemittel bildet.

Da die Leitungsstränge des Leitungssystems für das Wärmemittel Rinnenform aufweisen, sind sie besonders geeignet, von den Wellentälern der Dachhaut aufgenommen zu werden, so daß sich ein besonderer Aufbau auf der Dachhaut erübrigt. Die Rinnenform der Leitungsstränge stellt außerdem eine vergleichsweise große Oberfläche zur Absorption der Wärmestrahlung sicher, wodurch gesonderte Absorberplatten od. dgl. entfallen können. Dazu kommt noch, daß die von der Dachhaut im Bereich der Wellenberge aufgenommene Wärmemenge zu einem Teil an die Rinnen in den Wellentälern abgegeben wird, so daß auch ohne Abdeckung das Auslangen gefunden werden kann, zumal ein allenfalls etwas niedrigerer Wirkungsgrad durch einen zusätzlichen Rinnenstrang einfach ausgeglichen werden kann. Daß die Außenflächen der Rinnen gegebenenfalls mit einer wärmeabsorbierenden Schicht zu versehen sind, braucht wohl nicht besonders hervorgehoben zu werden.

Zur Befestigung brauchen die Rinnen lediglich in den Wellentälern der Dachhaut niedergehalten zu werden, was in einfacher Weise durch Querstreben erreicht werden kann, die mit der Dachhaut an der Tragkonstruktion des Daches festgeschraubt werden können. Ein besonderer Vorteil ergibt sich dabei, wenn die Rinnenhöhe der Tiefe der Wellentäler der Dachhaut entspricht, weil die Querstreben in einem solchen Fall unmittelbar auf die Rinnenlängsränder einwirken können. Eine zusätzliche Sicherung gegen ein Längsverschieben der Rinnen wird im allgemeinen nicht erforderlich sein, weil die Rinnen ja an beiden Enden an quer verlaufende Verteiler- und Sammelleitungen angeschlossen werden müssen, über die sich eine entsprechende Abstützung in Längsrichtung ergibt.

Damit das Verlegen eines solchen Sonnenkollektors ohne besonderen Montageaufwand gestaltet werden kann, können in weiterer Ausbildung der Erfindung jeweils wenigstens zwei an eine gemeinsame Verteilerleitung und an eine gemeinsame Sammelleitung für das Wärmemittel angeschlossene Rinnen eine vormontierte Baueinheit bilden, so daß beim Verlegen des Sonnenkollektors nur mehr die einzelnen, vormontierten Baueinheiten über die Sammel- und Verteilerleitung miteinander verbunden werden müssen.

In der Zeichnung ist der Erfindungsgegenstand in einem Ausführungsbeispiel schematisch dargestellt. Es zeigt

Fig. 1 einen erfindungsgemäßen Sonnenkollektor für ein Welldach im Querschnitt,

Fig. 2 mehrere über eine gemeinsame Verteiler- und Sammelleitung zu einer Baueinheit zusammengeschlossene Rinnen in Draufsicht und

Fig. 3 einen Querschnitt durch eine Rinne in einem größeren Maßstab.

Um keinen störenden Aufbau auf dem Dach eines Gebäudes in Kauf nehmen zu müssen, bestehen die zwischen einer Verteilerleitung 1 und einer Sammelleitung 2 parallelen Leitungsstränge 3 des dargestellten Sonnenkollektors jeweils aus einer doppelwandigen Rinne 4, die in ihrer Querschnittsform an die Querschnittsform der Wellentäler der Dachhaut 5 eines Welldaches angepaßt sind. Diese nach oben offenen, in die Wellentäler der Dachhaut 5 eingesetzten Rinnen 4 ragen nicht über die Dachhaut vor und unterbrechen auch nicht die Form der Dachhaut, so daß sich der Sonnenkollektor in nicht störender Weise an das Welldach anschmiegt. Zwischen den beiden Wänden 6 und 7 der Rinnen 4 ergibt sich ein geschlossener Strömungskanal 8 für das Wärmemittel, der über kegelige Anschlüsse 9 mit den Leitungen 1 und 2 verbunden ist.

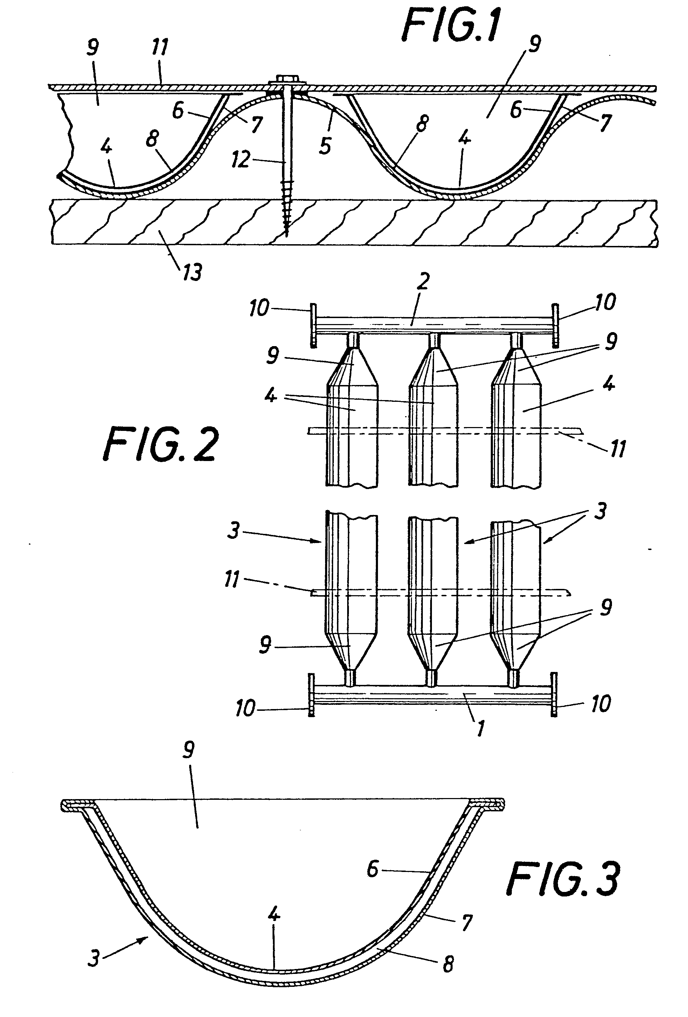

Wie Fig. 2 zeigt, können jeweils mehrere Rinnen 4 mit den Sammel- und Verteilerleitungen 1 und 2 zu einer Baueinheit vormontiert werden, was das Verlegen eines Kollektors vereinfacht, weil lediglich eine entsprechende Anzahl solcher Baueinheiten aneinandergereiht werden müssen. Über Anschlußflansche 10 lassen sich die einzelnen Abschnitte der Sammel- bzw. Verteilerleitung ohne Schwierigkeiten miteinander verbinden. Der Abstand der parallelen Rinnen 4 voneinander muß dabei selbstverständlich dem Wellenabstand der Dachhaut entsprechen.

Zur Befestigung der Baueinheiten bzw. der Rinnen 4 dienen Querstreben 11, die mit Abstand voneinander angeordnet sind, wie dies strichpunktiert in Fig. 2 angedeutet ist. Diese Querstreben 11 halten die Rinnen 4 gegen die Wellentäler der Dachhaut 5 nieder und können beispielsweise mit den Befestigungsschrauben 12 für die Dachhaut 5 an der Dachunterkonstruktion 13 angeschraubt werden.

Daß die Leitungen 1 und 2 nicht fest mit den Rinnen 4, sondern auch über flexible Schlauchverbindungen verbunden sein können, um eine einfachere Anpassung an die jeweiligen Gegebenheiten zu ermöglichen, ist wohl selbstverständlich und braucht nicht näher ausgeführt zu werden.

**Patentansprüche**

1. Sonnenkollektor für ein Welldach mit einem auf dem Dach vorgesehenen Leitungssystem, das aus parallelen, im Bereich der Wellentäler der Dachhaut (5) verlegten Leitungssträngen (3) für das aufzuheizende Wärmemittel zusammengesetzt ist, dadurch gekennzeichnet, daß die Leitungsstränge (3) jeweils aus einer im Querschnitt an die Form der Wellentäler der Dachhaut (5) angepaßten, nach oben offenen, doppelwandigen Rinne (4) bestehen, die zwischen den beiden Rinnenwänden (6, 7) einen geschlossenen Strömungskanal (8) für das Wärmemittel bildet.

2. Sonnenkollektor nach Anspruch 1, dadurch gekennzeichnet, daß die Rinnenhöhe der Tiefe der Wellentäler der Dachhaut (5) entspricht.

3. Sonnenkollektor nach Anspruch 1 oder 2, dadurch gekennzeichnet, daß jeweils wenigstens zwei an eine gemeinsame Verteilerleitung (1) und an eine gemeinsame Sammelleitung (2) für das Wärmemittel angeschlossene Rinnen (4) eine vormontierte Baueinheit bilden (Fig. 2).

**Claims**

1. A solar collector for a corrugated roof comprising a conduit system which is provided on the roof and composed of parallel conduit lines (3) for the heating fluid to be heated, which are installed in the valleys of the corrigated roofing (5), characterized in that each conduit line (3) consists of an open-topped, double-walled trough (4), which conforms in cross-section to the valleys of the corrigated roofing (5) and between the two walls (6, 7) of the trough defines a closed flow passage (8) for the heating fluid.

2. A solar collector according to claim 1, characterized in that the height of the trough corresponds to the depth of the valleys of the corrugated roofing (5).

3. A solar collector according to claim 1 or 2, characterized in that at least two troughs (4) which are connected to a common supply manifold (1) and to a common collecting manifold (2) for the heating fluid constitute a preassembled unit of construction (fig. 2).

**Revendications**

1. Collecteur solaire pour toît ondulé, comportant un système de tuyauterie prévu sur le toît et qui se compose de tronçons de tuyau (3) parallèles posés dans la région des creux d'ondulation de la couverture (5) et destinés au fluide thermique à chauffer, caractérisé par le fait que les tronçons (3) de tuyau sont formés chacun d'une gouttière (4) à double paroi ouverte en haut, adaptée à la forme des creux d'ondulation de la couverture (5) et qui forme, entre les deux parois (6, 7) de gouttière, un canal d'écoulement (8) fermé pour le fluide thermique.

2. Collecteur solaire selon la revendication 1, caractérisé par le fait que la hauteur des gouttières correspond à la profondeur des creux d'ondulation de la couverture (5).

3. Collecteur solaire selon l'une des revendications 1 et 2, caractérisé par le fait qu'au moins deux gouttières (4), raccordées à un tuyau distributeur commun (1) et à un tuyau collecteur commun (2) destinés au fluide thermique, forment chaque fois un bloc monté à l'avance (fig. 2).

# FIG.1

# FIG.2

# FIG.3